Europäisches Patentamt

(19) European Patent Office

Office européen des brevets

(11) Numéro de publication: **0 258 110**
**B1**

(12) **FASCICULE DE BREVET EUROPEEN**

(45) Date de publication du fascicule du brevet:
**07.11.90**

(21) Numéro de dépôt: **87401794.0**

(22) Date de dépôt: **31.07.87**

(51) Int. Cl.⁵: **A47J 37/12, B65G 65/46**

(54) Organe distributeur pour produits en morceaux, tels que des frites.

(30) Priorité: **04.08.86 FR 8611258**

(43) Date de publication de la demande:
**02.03.88 Bulletin 88/9**

(45) Mention de la délivrance du brevet:
**07.11.90 Bulletin 90/45**

(84) Etats contractants désignés:
**BE DE GB IT LU NL SE**

(56) Documents cités:
**GB-A- 828 758**
**US-A- 1 673 313**
**US-A- 2 973 855**
**US-A- 3 357 341**

(73) Titulaire: **Mariotti, René, 30 rue du Calvaire,**
**F-92210 Saint-Cloud(FR)**
(84) Etats contractants désignés: **BE DE GB IT LU NL**

(73) Titulaire: **FRITECO, INC., 8251 Greensboro Drive**
**Suite 150, Mclean,VA 22102(US)**
(84) Etats contractants désignés: **SE**

(72) Inventeur: **Mariotti, René, 30, rue du Calvaire,**
**92210 Saint-Cloud(FR)**

(74) Mandataire: **Sauvage, Renée, Cabinet Sauvage 100 bis,**
**avenue de Saint-Mandé, F-75012 Paris(FR)**

## Description

La présente invention a pour objet un organe distributeur pour produits en morceaux, tels que des frites, constitué par une vis d'Archimède formée d'une succession de filets, d'un pas dit "normal", tournant autour d'un axe, ladite vis étant logée dans la partie basse d'une trémie chargée en produit à distribuer et débouchant à l'extérieur de la trémie par une ouverture d'évacuation prévue dans cette dernière.

Un tel organe distributeur est décrit dans le US-A 3 357 341 et trouve son application, par exemple, dans la friteuse industrielle objet du brevet français n° 2 501 491 du Demandeur.

Lorsque les produits en morceaux, tels que des frites, sont distribués à l'aide d'un organe distributeur du type précité vers des moyens de pesage de portions, il peut arriver que les morceaux tombent en groupe sur les moyens de pesage, et comme il n'est pas possible de retirer l'excès de produit, le poids de la portion délivrée est faux.

La présente invention a pour but de remédier à cet inconvénient et, à cette fin, la vis d'Archimède se projette hors de l'ouverture d'évacuation sur une longueur au moins égale audit pas normal et, au niveau de l'ouverture d'évacuation, l'axe de ladite vis s'interrompt et se ramifie en un groupe de branches qui se projettent également hors de l'ouverture d'évacuation sur une longueur au moins égale audit pas normal et qui s'écartent angulairement de la direction dudit axe.

Ces branches ont pour effet de séparer les groupes de morceaux de produit qui se présentent à l'ouverture d'évacuation, de sorte que lesdits morceaux tombent pratiquement un par un sur les moyens de pesage.

De préférence, les extrémités libres des branches sont régulièrement espacées sur 360°.

Dans une forme de réalisation pratique de l'invention, l'organe distributeur comporte trois branches faisant entre elles un angle de 120°.

Les branches sont soudées en bout sur l'axe de la vis d'Archimède et le bord libre du dernier filet est soudé sur l'une de ces branches.

Avantageusement, la longueur de chaque branche est supérieure au pas normal de la vis d'Archimède et le pas séparant le dernier filet de ladite vis, qui se trouve à l'extérieur de la trémie, et l'avant dernier filet est égal à la longueur desdites branches.

De la sorte, les produits en morceaux s'étalent dans le dernier filet, plus plat, de la vis d'Archimède et sont plus facilement séparés les uns des autres par les branches.

L'invention sera mieux comprise à la lecture de la description ci-après faite en référence aux dessins annexés dans lesquels :

- la figure 1 est une vue en bout de la trémie munie de l'organe distributeur selon l'invention, et
- la figure 2 est une vue en coupe partiellement éclatée prise selon la ligne 2-2 de la figure 1.

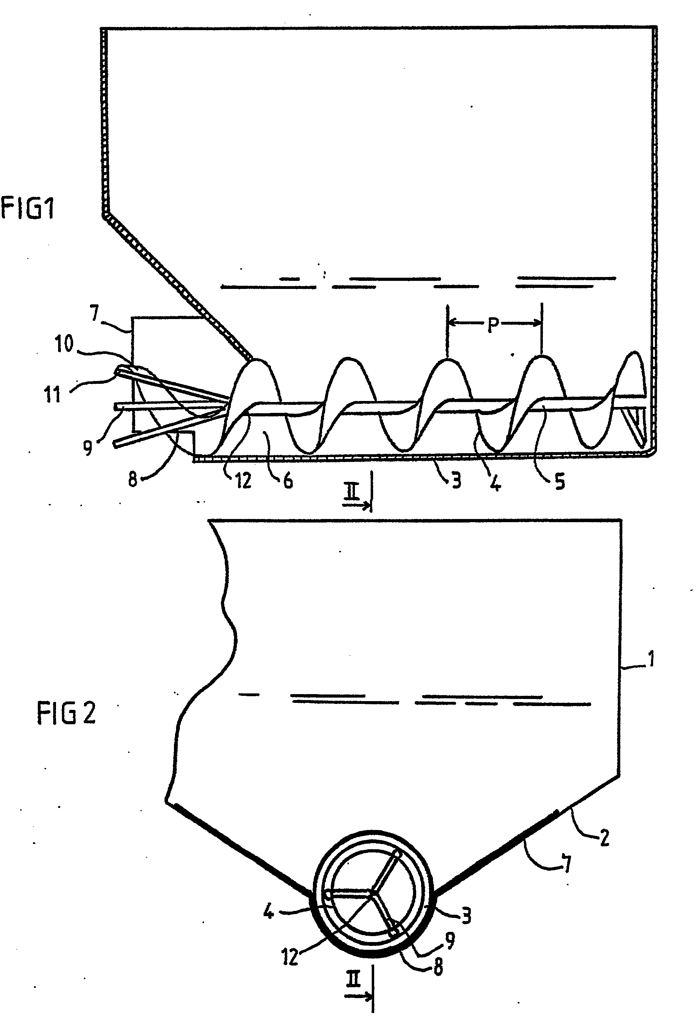

Si l'on se réfère à la figure 1, on voit que la trémie est constituée d'une cuve ayant des parois latérales 1 verticales et des parois de fond 2 convergeant vers une goulotte 3 dans laquelle est logée une vis d'Archimède 4 entraînée en rotation par son axe 4. La vis d'Archimède 4 débouche à l'extérieur de la trémie par un orifice d'évacuation 6. L'orifice d'évacuation communique avec une gouttière 7 largement évasée et présentant une ouverture 8 à sa partie inférieure, cette ouverture 8 étant à l'aplomb de moyens de pesage (non représentés). Comme on le voit, l'axe 5 s'interrompt au niveau de l'ouverture d'évacuation pour se ramifier en trois branches 9 qui s'écartent angulairement de la direction de l'axe 5 et sont règulièrement réparties dans l'espace, de telle sorte qu'elles font entre elles un angle de 120°. Les branches 9 sont soudées en bout en 12 sur l'axe 5.

La longueur des branches 9 est supérieure au pas normal p de la vis d'Archimède et l'extrémité du dernier filet 10 de la vis d'Archimède est soudée en 11 sur l'une des branches 9. Le pas compris entre ce dernier filet et l'avant dernier filet est plus long que le pas p, de sorte que ce dernier filet présente une pente plus douce que les autres filets de la vis d'Archimède et les produits en morceaux contenus dans la trémie, tels que des frites, peuvent s'étaler largement sur sa surface.

Le fonctionnement de l'organe distributeur s'effectue comme suit. Le produit en morceaux contenu dans la trémie 1 tombe par gravité sur la vis d'Archimède 4 qui est animée d'un mouvement de rotation autour de son axe 5. Comme cela est bien connu, les morceaux se trouvent ainsi entraînés vers l'orifice d'évacuation 6 et ils parviennent finalement sur le dernier filet 10 de la vis d'Archimède. Ce faisant, ils sont séparés les uns des autres par les branches 9 qui tournent en même temps que l'axe 5. De cette manière, les morceaux tombent pratiquement un par un par l'orifice 8 sur les moyens de pesage.

## Revendications

1. Organe distributeur pour produits en morceaux, tels que des frites, constitué par une vis d'Archimède (4) formée d'une succession de filets d'un pas (p), dit "pas normal", tournant autour d'un axe (5), ladite vis étant logée dans la partie basse d'une trémie chargée en produits à distribuer, et débouchant à l'extérieur de la trémie par une ouverture d'évacuation (6) prévue dans cette dernière, caractérisé en ce que la vis d'Archimède (4) se projette hors de l'ouverture d'évacuation (6) sur une longueur au moins égale audit pas normal (p) et en ce qu'au niveau de l'ouverture d'évacuation (6), l'axe (5) de la vis d'Archimède (4) s'interrompt et se ramifie en un groupe de branches (9) qui se projettent également hors de l'ouverture d'évacuation (6) sur une longueur au moins égale audit pas normal (p) et qui s'écartent angulairement de la direction dudit axe.

2. Organe selon la revendication 1, caractérisé en ce que les extrémités libres des branches sont régulièrement espacées sur 360°.

3. Organe selon la revendication 1 ou 2, caractérisé en ce qu'il comporte trois branches (9) faisant entre elles un angle de 120°.

4. Organe selon l'une queconque des revendications 1 à 3, caractérisé en ce que la longueur de chaque branche (9) est supérieure au pas normal (p) de la vis d'Archimède (4) et en ce que le pas séparant le dernier filet de ladite vis, qui se trouve à l'extérieur de la trémie, et l'avant dernier filet est égal à la longueur desdites branches (9).

5. Organe selon l'une quelconque des revendications 1 à 4, caractérisé en ce que les branches (9) sont soudées en bout (en 12) sur l'axe (5) de la vis d'Archimède (4).

6. Organe selon la revendication 5, caractérisé en ce que le bord libre du dernier filet est soudé (en 11) sur l'une des branches (9).

## Patentansprüche

1. Ausgabevorrichtung für Stückgut, wie beispielsweise Pommes Frites, gebildet aus einer archimedischen Schraube (4), die aus einer Aufeinanderfolge von Gewindegängen mit einer Steigung (p), genannt "Normalsteigung", gebildet ist, die sich um eine Achse (5) dreht, wobei die Schraube in dem unteren Bereich eines Behälters angeordnet ist, der mit dem auszugebenden Gut gefüllt ist, und in das Äussere des Behälters durch eine Ausbringöffnung (6) mündet, die in diesem letzteren vorgesehen ist,
dadurch gekennzeichnet,
dass die archimedische Schraube (4) aus der Ausbringöffnung (6) auf einer Länge vorspringt, die wenigstens gleich der normalen Steigung bzw. Ganghöhe (p) ist, und dass auf der Höhe der Ausbringöffnung (6) die Achse (5) der archimedische Schraube (4) unterbrochen ist und sich in eine Gruppe von Armen (9) verzweigt, die ebenfalls aus der Ausbringöffnung (6) heraus auf einer Länge vorspringen, die gleich der normalen Ganghöhe (p) ist, und die sich winkelig zu der Richtung der genannten Achse auseinanderbewegen.

2. Vorrichtung nach Anspruch 1, dadurch gekennzeichnet, dass die freien Enden der Arme regelmässig über 360° beabstandet sind.

3. Vorrichtung nach Anspruch 1 oder 2, dadurch gekennzeichnet, dass sie drei Arme (9) aufweist, die untereinander einen Winkel von 120° bilden.

4. Vorrichtung nach einem der Ansprüche 1 bis 3, dadurch gekennzeichnet, dass die Länge eines jeden Armes (9) grösser ist als die normale Ganghöhe (p) der archimedischen Schraube (4), und dass die Ganghöhe, die den letzten Gewindegang der Schraube, die sich ausserhalb des Behälters befindet, von dem vorletzten Gewindegang trennt, gleich der Länge der genannten Arme (9) ist.

5. Vorrichtung nach einem der Ansprüche 1 bis 4, dadurch gekennzeichnet, dass die Arme (9) am Ende (bei12) auf die Achse (5) der archimedischen Schraube (4) geschweisst sind.

6. Vorrichtung nach Anspruch 5, dadurch gekennzeichnet, dass der freie Rand des letzten Gewindegangs auf einen der Arme (9) geschweisst (bei 11) ist.

## Claims

1. A mean for dispensing products in the form of pieces or chips, such as potato chips, constituted by an Archimedes screw (4) formed by a series of threads having a pitch (p) called "normal pitch", rotating about a shaft (5), said screw being housed in the low part of a hopper loaded with products to be dispensed, and opening outwardly of the hopper through a discharge opening (6) provided in this latter, characterized in that the Archimedes screw (4) projects outwardly of the discharge opening (6) along a distance at least equal to said normal pitch (p), and in that, at the level of the discharge opening (6), the shaft (5) of the Archimedes screw (4) is interrupted and branches out into a group of legs (9) which also projects outwardly of the discharge opening (6) along a distance at least equal to said normal pitch (p) and which deviate angularly from the direction of said shaft.

2. Dispensing means according to claim 1, characterized in that the free ends of the legs are spaced evenly apart over 360°.

3. Dispensing means according to claim 1 or 2, characterized in that it includes three legs (9) forming an angle of 120° with each other.

4. Dispensing means according to any one of claims 1 to 3, characterized in that the length of each leg (9) is greater than the normal pitch (p) of the Archimedes screw (4) and in that the pitch operating the last screw thread of said screw, which is situated outside the hopper, and the last but one screw thread is equal to the length of said legs (9).

5. Dispensing means according to any one of claims 1 to 4, characterized in that the legs (9) are welded (at 12) to the end of the shaft (5) of the Archimedes screw (4).

6. Dispensing means according to claim 3, characterized in that the free edge of the last screw thread is, welded (at 11) to one of the legs (9).

FIG1

7

10

11

9

8

12  6

P

II

3  4  5

FIG 2

1

2

7

4  3

12  9

8

II